Europäisches Patentamt

European Patent Office

Office européen des brevets

(11) Publication number: **0 398 849**
**A2**

## (12) EUROPEAN PATENT APPLICATION

(21) Application number: **90830212.8**

(22) Date of filing: **15.05.90**

(51) Int. Cl.5: **F17C 13/04**

(30) Priority: **16.05.89 IT 4796089**

(43) Date of publication of application:
**22.11.90 Bulletin 90/47**

(84) Designated Contracting States:
**AT BE CH DE DK ES FR GB GR LI LU NL SE**

(71) Applicant: **CRYOTECNAM DI GAROFALO GUIDO & C. s.a.s.**
**Zona Industriale**
**I-95040 Piano Tavola-Belpasso (Catania)(IT)**

(72) Inventor: **Garofalo, Rodolfo**
**Villaggio Mezzocampo**
**I-95040 Piano Tavola -Belpasso (Catania)(IT)**

(74) Representative: **Sarpi, Maurizio**
**Studio FERRARIO Via Collina, 36**
**I-00187 Roma(IT)**

(54) **A rapid-coupling valve for transferring and bottling compressed gases for technical uses.**

(57) A rapid coupling valve, comprising an outer cylindrical body provided with an end bottom which is tightly screwed on the arrival pipe of the compressed gas, a set of threaded jaws arranged in a crown-like disposition around the free end of said body, said jaws being intended for becoming tightened in a controlled way about the threading of the inlet fitting of the cylinder to be filled, a first piston that is tight sealed against said filling fitting, and a safety piston which can slide inside said body and locks said threaded jaws in the tightening position till the pressure of the arrival gas is above a value which is set forth previously.

FIG. 4

# A RAPID-COUPLING VALVE FOR TRANSFERRING AND BOTTLING COMPRESSED GASES FOR TECHNICAL USES

This invention relates to a rapid coupling valve to be applied to pipes intended for carrying out the operations of transferring and bottling compressed gases.

As is well known to those who are skilled in the art, the operations consisting in transferring and bottling compressed gases (as for instance the operation of filling cylinders with a gas like $O_2$) are to be performed with particular technical expedients in order to obtain maximum safety in the operation itself.

To that aim, according to the present state-of-the-art, the operations of filling a cylinder with a compressed gas consist in coupling the cylinder valve with the feeding gas pipe by means of suitable threaded fittings which are to be screwed tight, feeding the gas in under pressure just when the obtainment of a perfectly sealed connection has been ascertained. After the filling operation has been completed, said operations are repeated for disconnecting the filled cylinder from the feeding pipe.

The object of the present invention is that of realizing a device that allows a remarkable reduction of the transferring times to be obtained, as the coupling and the disconnection operations between the arrival pipe and the cylinder are performed instantaneously with no screwing and tightening either before or after the bottling operation, and in addition the coupling device itself is locked in an absolutely safe way for the whole time during which the pressure within said arrival piping is above a previously set minimum value.

According to the present invention, a rapid coupling valve is provided, which comprises a substantially cylindrical outer body that bears at one of its ends a bottom for tight seal screwing on the arrival pipe of the compressed gas, said gas also comprising a set of threaded jaws which can open wide apart, and which are housed within said body at a position close to the free end of the same, said jaws being intended for becoming tightened about the cylinder inlet fitting, as well as a counteracting spring that pushes said threaded jaws towards the closure position, a seal small piston that is tightened against the cylinder fitting by the action of the arrival gas pressure, and a second safety piston that keeps said threaded jaws locked till the pressure of the arrival gas is above a previously set minimum value.

Both said seal small piston and said safety piston are associated with calibrated springs so as to ensure the conditions of minimum pressure above which both the coupling with the cylinder and the locking of the valve on the filling fitting of the cylinder are ensured. Stated otherwise, the more the pressure in the supply pipe, the stronger the tightening of the joint on the cylinder, so that the accidental or the controlled disconnection of the joint itself is made impossible till the pressure is not below a value which is set forth for absolute safety.

This invention will be disclosed in the following with reference to the enclosed drawings, which represent just for illustrative and not for limitative purposes a preferred embodiment of the invention itself. In the drawings:

Figure 1 is a side view;

Figures 2 and 3 are the end views along the directions pointed out by the letters A and B in Figure 1;

Figure 4 is the cross-sectional view along the plane I-I of Figure 1;

Figure 5 shows the valve as assembled on a cylinder, and the possibility is also shown of applying a thin safety cable along the delivery pipe.

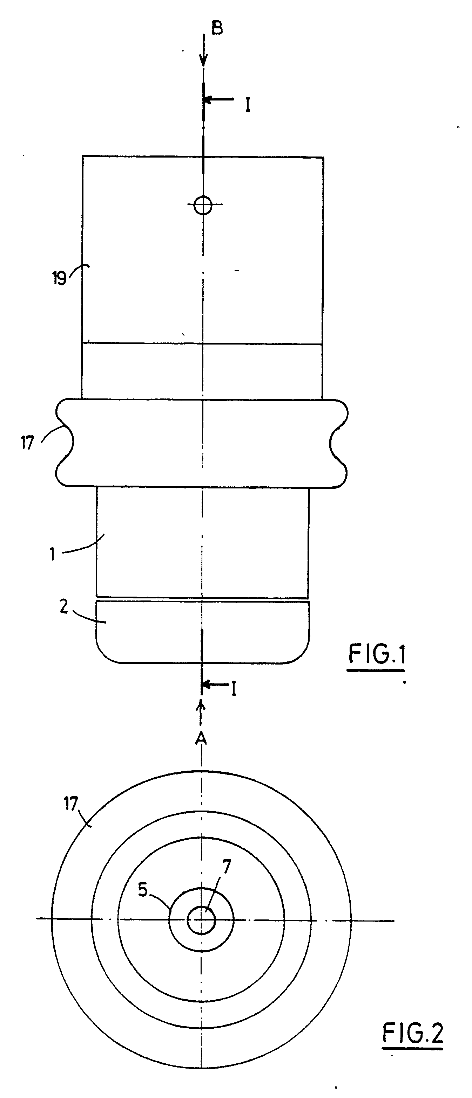

With reference now to the Figures 1-4, the reference numeral 1 points out the outer body of the valve which is cylindrical in shape and bears the bottom 2 screwed at 3 with the interposition of the seal annular gasket 4. Said bottom 2 bears in its turn a threading 5 on which the compressed gas arrival pipe (not shown) is screwed.

Inside said body 1, the safety piston 6 is assembled in a slidable way, said piston bearing the axial hole 7 and being provided with the ring 8 screwed at 9. The collar 10 is inserted between said piston 6 and said outer body 1, said collar abutting against the bottom 2 and leaning against the two overlapped washers 11. Two O-rings 12 and 13 are interposed between said members 1, 6 and 10 in order to ensure a tight seal between the same during the relative sliding motion. The washers 11 in their turn can slide inside the annular space 14 and they can strike against the shoulder 15 obtained in the outer sleeve 16 which is provided with a groove-bearing metal ring 17.

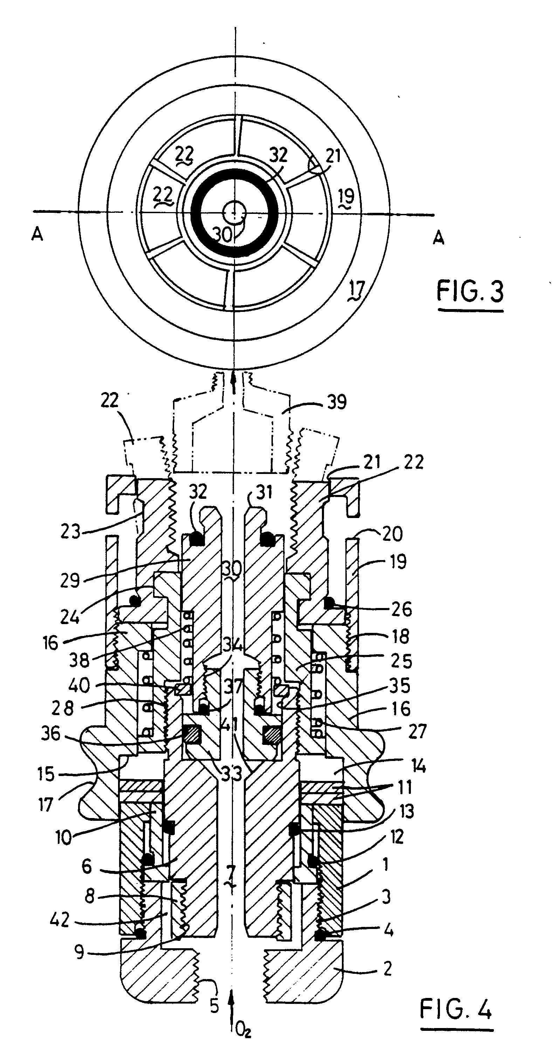

The cylinder 19 that bears the holes 20 is screwed at 18 on the outer sleeve 16, said cylinder also bearing an inner edge 21 against which a set of threaded jaws 22 leans (see Figures 3 and 4), said jaws being provided with an outer peripheral groove 23. Said threaded jaws 22 are arranged in a crown-like way around the edge 24 of the intermediate pipe 25 and they are kept in place by an elastic ring 26 at a position close to the base of the jaws themselves.

A calibrated spring 27 is interposed between the intermediate pipe 25 and the outer sleeve 16, said spring keeping the jaws 22 inside the cylinder 19. The intermediate pipe 25 is screwed at its lower portion at 28 on the safety piston 6, so that the hole assembly made up of said piston 6, of said cylinder 25 as well as of said threaded jaws 22 can slide as a single piece with respect to the outer sleeve 16 which is integral with the cylinder 19, so compressing the spring 27.

The seal small piston 29 is assembled in a slidable way inside the intermediate pipe 25, said piston bearing an axial hole at 30 and ending in an outlet end 31 provided with a seal ring 32, said end being intended for entering a threaded fitting 39 which is provided in the reservoir to be filled with the compressed gas, for instance a cylinder.

The seal small piston 29 bears a base portion 33 which is screwed at 34 and can slide inside the upper edge 35 of the safety piston 6. The tight seal between the parts mentioned above is ensured by a tight seal ring 36 as well as by an O-ring 37. A second calibrated spring 38 is inserted between said seal small piston 29 and the locking ring 40 which is integral with the piston 6, so as to push the base 33 of said small piston 29 against the shoulder 41 of the piston 6.

The operation is as follows: in order to couple the valve to the cylinder, in the absence of pressure, the operator presses the sleeve 16 downwards by compressing the spring 27. As a result of such operation, the safety piston 6, together with the intermediate pipe 25 and the threaded jaws 22, is pushed upwards (looking at Figure 4), and the threaded jaws 22 come out of the upper edge 21 and open wide apart, till assuming the position shown in dotted lines in Figure 4. In these conditions, it is possible to insert the fitting 39 of the cylinder between the threaded jaws 22. By removing the pressure on the sleeve 16 and on the bottom 22, the spring 27 takes the jaws 22 again into the edge 21, and the cylinder is so connected with a perfect tightening and absolute safety with the filling valve, without the requirement of having recourse to a screwing operation.

At that point, the pressurized gas is delivered, which gas enters the cylinder passing through the passage ways 7 and 30, the pressurized gas, acting on the base 33 of the small piston 29, pushes the outlet 31 and the gasket 32 into a position with perfect tight seal within the inlet fitting 39 of the cylinder.

At the same time the gas under pressure, passing through the annular space 42, pushes the collar 10 and the washers 11 upwards, till said washers strike against the shoulder 15 of the outer sleeve 16. In these conditions, the annular space 14 is annulled and the members 1, 2, 16 and 19 form a single integral whole, so that any translation motion of the threaded jaws 22 is prevented, said jaws keeping in the locked position on the fitting 39 of the cylinder.

When the flow of the pressurized gas is finished, the spring 27 of the safety piston 6 and the spring 38 of the seal small piston 29 take the whole assembly into the starting conditions, and it is possible to cause the jaws 22 to slide outwards, so that the valve is disconnected from the filled cylinder.

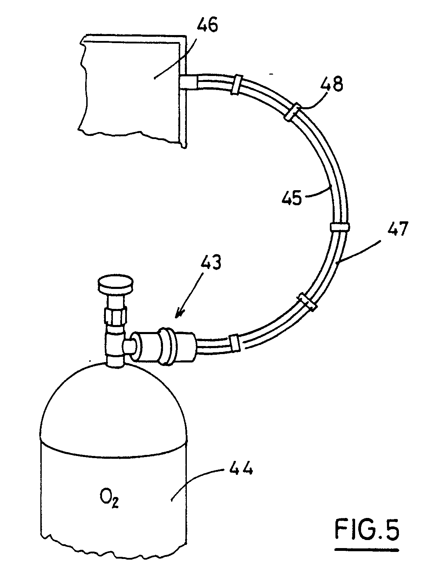

Figure 5 illustrates the connection of the valve 43 with the cylinder 44 and with the delivery pipe 45 which comes from the loading ramp 46. It is possible to put a thin safety cable 47 along the side of said delivery pipe 45, said safety cable being made up of a metal or of any other material of suitable strength and being applied by means of a set of ties 48 at given intervals between the valve 43 and the ramp 46.

The task of said thin safety cable 47 is that of preventing sudden motions of the pipe 45 from occurring, as they are dangerous for the operating personnel, in case of cracks or of breaking of the pipe itself.

This invention has been illustrated and disclosed according to a preferred embodiment of the same, but it is to be understood that construction variants can be introduced in the same as a matter of practice, without departing from the spirit and scope of the invention for which a priority right is claimed.

**Claims**

1. A rapid coupling valve for use with the pipes employed for transferring or bottling gases under high pressure, said valve being characterized in that it comprises, in combination, an outer cylindrical body, a bottom connected with the gas pipe, a set of rapid-coupling, threaded jaws arranged in a crown-like way around the free end of said cylindrical body, said jaws being intended for becoming tightened around a corresponding fitting which is borne by the reservoir or the cylinder, a seal small piston which is pushed by the gas pressure against the inlet portion of said cylinder and a safety piston which is also acted upon by the pressurized gas, and which keeps said threaded jaws tightened in their locking position, till the pressure goes below a previously set value.

2. A valve according to claim 1, characterized in that said threaded jaws are kept inside a cylindrical body which is integral with said outer envelope, by means of an elastic ring engaged near the base portion of the jaws themselves, concentrically with respect to a tubular member interposed between the outer sleeve and the seal small piston.

3. A valve according to claims 1 and 2, characterized in that said outer body comprises a sleeve which is integral with a projecting metal ring acting as a handgrip, said sleeve being able to slide in the absence of pressure with respect to said bottom connected with the delivery pipe.

4. A valve according to claims 1-3, characterized in that said seal small piston and the safety piston can slide inside said handgrip body against the action of a pair of calibrated springs which are arranged respectively around said seal small piston and within a housing between the outer, metal-ring shaped sleeve, and the jaw-bearing cylinder.

5. A valve according to claims 1-4, characterized in that both said seal small piston and the safety piston are aligned and they are crossed by a passage in the axial sense which causes the arrival pipe of the pressurized gas to communicate with the inlet fitting of the cylinder.

6. A valve according to claims 1-5, characterized in that the push of the seal small piston against the action of the respective calibrated spring is obtained by the action of the gas at the base portion of the small piston itself.

7. A valve according to claims 1-6, characterized in that the locking of the threaded jaws in the coupling position of the valve is obtained through the cation of the pressurized gas on an annular space provided at the base portion of the safety piston.

8. A valve according to claims 1-7, characterized in that the pressure in said annular space causes a ring which is concentric with the safety piston to slide, said pressure also causing two overlapped washers which are integral with said ring to slide, said washers being so pressed against an inner shoulder of the outer handgrip sleeve, so that the possibility of relative slide motion between the sleeve and the bottom is removed, and then the possibility of accidental or controlled disconnection of the valve is also removed, for the whole period during which the pressure of the arrival gas is above the force exerted by the calibrated spring.

9. A valve according to claims 1-8, characterized in that all sliding portions are provided with annular seal gasket, and all parts are coupled through precision threadings.

10. A valve according to claims 1-9, characterized in that the delivery pipe of the compressed gas is assembled side by side with a thin safety cable anchored at the two ends at the points corresponding to the outer sleeve of the valve and of the loading ramp, so as to prevent any danger for the personnel from occurring as a result of sudden, uncontrollable motions of the pipe itself following to cracks or breaking of the same.

11. A rapid coupling valve for transferring or bottling-high-pressure gases, according to claims 1-10 and substantially as disclosed and illustrated above.

FIG.1

FIG.2

FIG. 3

FIG. 4

FIG.5